# EUROPEAN PATENT APPLICATION

(11) **EP 1 783 539 A1**
(43) Date of publication of application: **09.05.2007**
(21) Application number: 04724970.1
(22) Date of filing: 01.04.2004
(51) Int. Cl.: G02F 1/133

(54) **SIDE FRAME STRIP USED FOR LIQUID CRYSTAL DISPLAY DEVICE**

(71) Applicant: Quanta Display Inc., Tao Yuan Shien, Taiwan 333 (TW)
(72) Inventor: LI, Sihan, Tao Yuan Shien, Taiwan 333 (CN); ZHUANG, Yonghan, Tao Yuan Shien, Taiwan 333 (CN); LU, Lihuang, Tao Yuan Shien, Taiwan 333 (CN); XIAO, Dengkun, Tao Yuan Shien, Taiwan 333 (CN)
(74) Representative: Hruschka, Jürgen
(86) International application number: PCT/CN2004/000300
(87) International publication number: WO 2005/096079

(57) **Abstract**

A side fixing frame for a liquid crystal display device is provided. The side fixing frame has a U-shaped configuration and is provided with multiple engaging elements. The engaging elements of the side fixing frame couple with corresponding counterparts of a supporting frame used in a liquid crystal display device so as to fasten the side fixing frame with the supporting frame. Because of the U-shaped configuration design of the side fixing frame, the frame can attain the desired securing strength and reduce the materials needed for producing the side fixing frame and the production cost.

## Description

### Field of the Invention

The present invention relates to a side fixing frame for a liquid crystal display device, and particularly to a U-shaped side fixing frame with multiple engaging elements to couple and to secure a supporting frame of a liquid crystal display device.

### Description of the Prior Art

As semiconductor fabrication technologies are rapidly advanced, display devices are required to be lighter, thinner, smaller and slimmer. This is especially the true for flat panel display devices such as liquid crystal displays and plasma displays, asking for high resolution, but smaller and lighter in size. Therefore, the industry endeavors in reducing the number of assembly elements and in simplifying the process to the greatest extent possible.

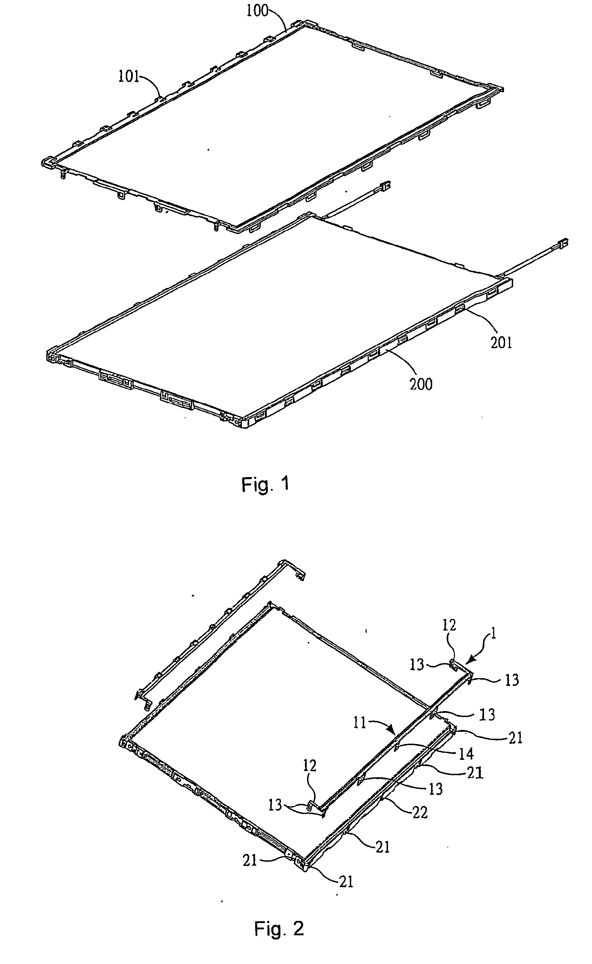

LCD monitors are widely used for desktop computers and notebook computers. An LCD panel and a backlight module are respectively assembled using separate manufacturing processes before both are assembled together. A conventional backlight module utilizes an upper frame with a central opening and a supporting frame to assemble the components of the liquid crystal display device such as a reflecting plate, a light guiding plate, a diffusing film and a lamp assembly, as shown in Fig. 1. Making liquid crystal display devices lighter and slimmer, the upper frame has to be made very thin, resulting in weak structure and the difficulty of mold injection. The assembly also becomes more complicated. To improve the fabrication process, US Patent No. 6,502,945B2 discloses a stack type backlight module and an assembly method thereof. The stack type backlight module includes a mold frame, a reflecting plate, a light guiding plate placed on the reflecting plate, a pair of lamp assemblies respectively accommodated at each side of the light guiding plate, diffusing plates placed on the light guiding plate and a pair of fixing frames. The fixing frames cover the edge of the light guiding plate and are also detachably coupled to the mold frame.

US Patent No. 6,502,945B2 utilizes an L-shaped mold frames and a supporting frame to serve as a support for assembling other components. For supporting the stack type backlight module, the L-shaped mold frames need sufficient width to firmly support the LCD panel disposed on it. This reduces the percentage of the opening of the stack type backlight module, ex. the view field of the liquid crystal display panel. Hence, it is necessary to provide an assembling method, which can utilize mold frames with narrower edge to firmly support and secure the stack type backlight assembly. The process for narrowing down the edge of the mold frame is called "edge-narrowing".

Additionally, to save the material of the mold frame and reduce the cost of assembling the backlight module, another I-shape side mold frame is provided. The I-shaped side mold frame is provided with a groove for containing the liquid crystal display panel and the backlight module. The I-shaped side mold frame is also provided with engaging means on the edge of the I-shaped side mold frame for coupling and securing with the supporting frame. The I-shaped side mold frame supports and secures the whole stack backlight module by means of the grooves and the engaging means on the edge. The materials needed for producing the I-shape side mold frame is less than that of the known upper frame with opening. However, to attain a good securing effect, the edge of the I-shape side mold frame can not be made too narrow; otherwise, the good securing effect can not be provided. To meet the requirement for making the size of the liquid crystal display panels larger, the securing effect provided by the coupling strength of the groove of the I-shape side mold frame becomes worse. The resistant force of the I-shaped side mold frame against the external torque becomes smaller, and resulting in the I-shaped side mold frame to be easily detached from the stack type backlight module. Hence, the securing strength of the I-shaped side mold frame is still not enough, and the view field size of liquid crystal devices with the I-shaped side mold frame is less than that of devices with the upper frame.

To overcome the above drawbacks, the present invention is created.

### SUMMARY OF THE INVENTION

One objective of the present invention is to provide a side fixing frame for liquid crystal display devices, which has a U-shaped configuration and is provided with multiple engaging elements to couple and secure to a supporting frame of the liquid crystal display device.

The side fixing frame of the present invention has a U-shaped configuration and is provided with multiple engaging elements to couple and secure to the supporting frame of the liquid crystal display device. Thus, the present side fixing frame can provide a securing strength like that provided by the conventional device.

Besides, the amount of materials used for producing the side fixing frame of the present invention can be reduced to less than one half of materials currently used. Both the materials for mold injection and molding time are reduced. The purpose of reducing the production cost can be fulfilled.

Moreover, the securing purpose can be attained merely by disposing the side fixing frame of the present invention at the two opposite sides of the supporting frame. The assembling process is also simplified.

The fastening means of the present side fixing frame is based on the theory of securing with three points. The edge of the side fixing frame can be made narrower; and this can increase the view field of the liquid crystal display device. Therefore, the present invention increases the view field of the liquid crystal display device comparably more than the conventional device using the I-shaped side mold frames.

The side fixing frame of the present invention can couple with existing supporting frames. Therefore, there is no need to change the current assembly process. In addition, the purposes of easy assembling, firm securing, reduced molding time, reduced molding material and increased view field will be fulfilled.

### BRIEF DESCRIPTION OF THE DRAWINGS

FIG. 1 is a disassembled perspective view of an upper frame and a supporting frameused in the conventional backlight module;
FIG. 2 is a disassembled perspective view of a supporting frame and two side fixing frames of the present invention;
FIG. 3 is a perspective view of the side fixing frame of the liquid crystal display device of the present invention;
FIG. 4 is a front view of the side fixing frame of the liquid crystal display device of the present invention; and
FIG. 5 is a rear view of the side fixing frame of the liquid crystal display device of the present invention.

### DESCRIPTION OF THE EMBODIMENTS

The present invention will be described in detail in accordance with the following embodiments with reference to the accompanying drawings.

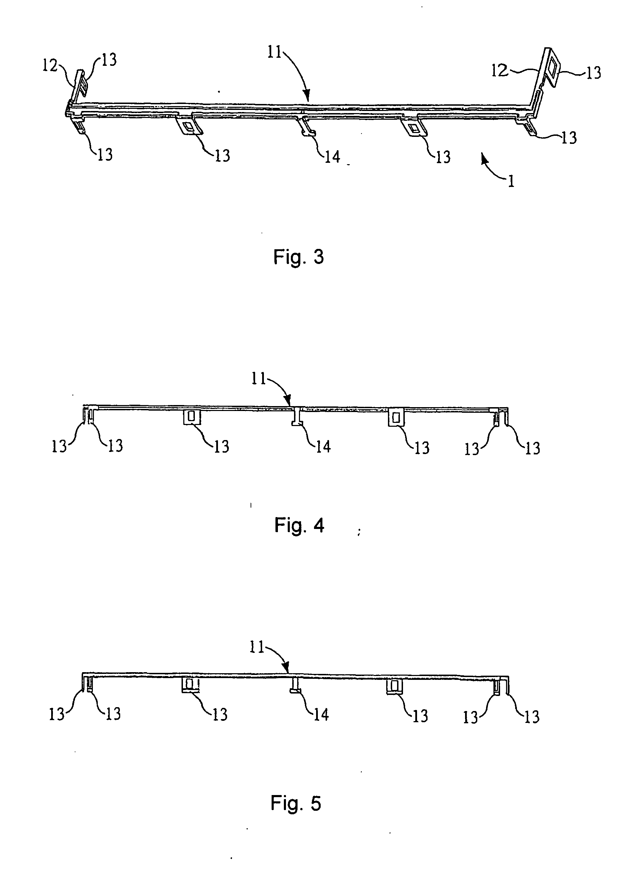

FIG. 2 is a disassembled perspective view of a supporting frame of the liquid crystal display device and two side fixing frames 1 of the present invention. FIG. 3 is a perspective view of the side fixing frame 1 of the present invention. As shown in Fig. 3, the side fixing frame 1 substantially includes a frame body 11 and a pair of extended parts 12. The frame body 11 and the extended parts 12 form a U-shaped configuration. The frame body 11 is provided with multiple of engaging elements 13 and 14, and one end of each of the extended parts 12 is provided with at least one engaging element 13. The number of the engaging elements 13 and 14 of the frame body 11 is not limited. However, the engaging elements 13 and 14 on some places of the frame body 11 must match with corresponding counterparts 21 or 22 of the supporting frame. According to mechanical theories, if each of the extended parts 12 is provided with one engaging element 13 and the frame body 11 is provided with one engaging element 13 or 14, the purpose of securing can be attained. Therefore, the frame body 11 can be provided with one or more engaging elements 13 and 14. Alternately, the purpose of securing also can be attained by way of disposing the side fixing frame 1 at one of the two opposite sides of the supporting frame.

FIG. 4 is a front view of the side fixing frame 1 and FIG. 5 is a rear view of the side fixing frame 1. There are seven engaging elements 13 and 14 on the side fixing frame 1 in the figure. However, the number of the engaging elements 13 and 14 can be fewer or greater than seven as long as the purpose of security can be attained.

The lengths of the two extended parts 12 of the side fixing frame 1 can be equal or unequal to each other. The length of the extended part 12 is not limited if the purpose of security can be attained. The side fixing frame 1 can be made from plastic material by mold injection.

The side fixing frame and engaging elements of the supporting frame can be a hook-type configuration or trench-type configuration, and engaged with each other of the figures according to the present invention. These engaging elements also can be a recess configuration, a protrusion configuration or any other configuration that allows to attain the engagement. In other words, the engaging elements 13 and 14 of the side fixing frame 1 can be any configuration as long as the engaging elements 21 are counterparts of those of the supporting frame.

When compared to the securing means of the upper frame of a conventional liquid crystal display device, the present invention has the same securing strength as a conventional upper frame though the side fixing frames 1 only need to be placed at the two opposite sides of the support frame to sustain the sufficient strength. This would result in fewer material used for producing the side fixing frame, and lower production cost.

Besides, the size of the side fixing frame 1 is smaller than that of the known upper frame. Therefore, the molding time in production is significantly reduced and costs can be lowered.

Furthermore, the purpose of security is attained by way of disposing the side fixing frame 1 at the two opposite sides of the supporting frame. The assembling process for the liquid crystal display device is also simplified.

Because of the design of the extended parts 12 of the side fixing frame 1, the side fixing frame 1 can provide a good securing effect by utilizing the theory of securing with three points. The edge of the side fixing frame 1 can be narrowed down; such is called "edge-narrowing" in the present invention. The view field of the liquid crystal display device thus can be enlarged. Compared to the conventional I-shaped side mold frame, the side fixing frame 1 of the present invention indeed enlarges the view field of the liquid crystal display device.

The embodiments are only used to illustrate the present invention and are not intended to limit the scope of the invention. Modifications of the embodiments can be made in line with the spirit of the present invention.

### DESCRIPTION OF THE REFERENCE NUMERAL

| | | | |
|---|---|---|---|
| 1 | side fixing frame | 11 | frame body |
| 12 | extended parts | 13, 14 | engaging element |
| 2 | supporting frame | 21, 22 | engaging element |

## Claims

1. A side fixing frame for a liquid crystal display device, comprising a frame body and a pair of extended parts forming a U-shaped configuration, wherein said frame body and each of said extended parts are respectively provided with at least one engaging element for coupling with a corresponding counterpart of a supporting frame used in the liquid crystal display device to fasten said side fixing frame with said supporting frame.

2. The side fixing frame of claim 1, wherein the lengths of the pair of said extended parts are equal to each other.

3. The side fixing frame of claim 1, wherein the lengths of the pair of said extended parts are unequal.

4. The side fixing frame of claim 1, wherein the shapes of said engaging elements can be the same or different, and each of said engaging elements forms a hook-type configuration or trench-type configuration to match each of the corresponding counterparts of said supporting frame having a trench-type configuration or hook-type configuration.

5. The side fixing frame of claim 2, wherein the shapes of said engaging elements can be the same or different, and each of said engaging elements forms a hook-type configuration or trench-type configuration to match each of the corresponding counterparts of said supporting frame having a trench-type configuration or hook-type configuration.

6. The side fixing frame of claim 3, wherein the shapes of said engaging elements can be the same or different, and each of said engaging elements forms a hook-type configuration or trench-type configuration to match each of the corresponding counterparts of said supporting frame having a trench-type configuration or hook-type configuration.

7. The side fixing frame of claim 1, wherein the shapes of said engaging elements can be the same or different, and each of said engaging elements forms a protrusion configuration or recess configuration to match each of the corresponding counterparts of said supporting frame having a recess configuration or protrusion configuration.

8. The side fixing frame of claim 2, wherein the shapes of said engaging elements can be the same or different, and each of said engaging elements forms a protrusion configuration or recess configuration to match each of the corresponding counterparts of said supporting frame having a recess configuration or protrusion configuration.

9. The side fixing frame of claim 3, wherein the shapes of said engaging elements can be the same or different, and each of said engaging elements forms a protrusion configuration or recess configuration to match each of the corresponding counterparts of said supporting frame having a recess configuration or protrusion configuration.
